# NEUE EUROPÄISCHE PATENTSCHRIFT

(11) **EP 0 665 379 B2**
(45) Veröffentlichungstag und Bekanntmachung des Hinweises auf die Entscheidung über den Einspruch: **27.08.2003**
(45) Hinweis auf die Patenterteilung: 13.01.1999
(21) Anmeldenummer: 94118814.6
(22) Anmeldetag: 30.11.1994
(51) Int. Cl.: F04D 29/42

(54) **Pumpenträger mit integriertem Ölkühler**
Pump support with integral oilcooler
Support d'une pompe avec refroidisseur d'huile intégré

(30) Priorität: 11.01.1994 DE 4400487
(43) Veröffentlichungstag der Anmeldung: 02.08.1995
(73) Patentinhaber: KTR KUPPLUNGSTECHNIK GMBH, D-48432 Rheine (DE)
(72) Erfinder:
(74) Vertreter: Arendt, Helmut, Dipl.-Ing.

(56) Entgegenhaltungen:
- EP-A- 0 482 378
- WO-A-84/03915
- DE-A- 2 750 967
- GB-A- 2 017 216
- GB-A- 2 088 960

## Beschreibung

Die Erfindung betrifft einen Pumpenträger mit integriertem Ölkühler mit einer Hydraulikölpumpe einer Hydraulikeinrichtuing, einem elektrischen Antriebsmotor und einem Wellenstrang.

Ein Pumpenträger zum Verbinden eines Antriebsmotors mit einer Pumpe ist durch das DE-Patent 27 50 967 bekannt. Bei diesem erstreckt sich der Kühler in Form von 4 Sektionen um den gesamten Umfang des verwendeten Radiallüfters. Die durch die 4 Kühlerelemente gebildeten Kühlkanäle werden in Umfangsrichtung von dem zu kühlenden Pumpenmedium durchflossen und radial zwischen den Kühllamellen von Luft, entweder von innen nach außen oder abwechselnd in benachbarten Bereichen von außen nach innen und von innen nach außen, durchströmt. Im letztgenannten Fall tritt die Luft im Bereich von zwei einander gegenüberliegenden Elementen ein und im Bereich der beiden anderen, in Umfangsrichtung um 90° versetzten Elemente, wieder aus. Hierfür ist es notwendig, die durch die Ansaugöffnungen angesaugte Luft mehrmals umzulenken, damit sie zum innenliegenden Ansaugbereich des Radiallüfters gelangen kann. Dadurch entstehen größere Strömungsverluste.

Zu berücksichtigen ist auch, daß die für den Antriebsmotor notwendige Kühlluft von einem Lüfterrad erzeugt wird, das an dem der Pumpe abgewandten Ende des Motors angeordnet ist. Die Kühlluft strömt axial, das Motorgehäuse einhüllend, in Pumpenrichtung. Ein bedeutender Teil der erwärmten Motorkühlluft trifft auf den Ansaugbereich des Ölkühlers und wird mit der diesem zugeführten Kühlluft angesaugt. Dabei kommt es vor dem Eintritt zu einer Vermischung mit einer Erhöhung der Kühllufttemperatur für den Ölkühler. Der Temperaturgradient zwischen Ölkühler und atmosphärischer Luft wird reduziert, die Kühlleistung nimmt entsprechend ab.

Um hier Abhilfe zu schaffen, wird in der EP 0 482 378 A1 für einen Pumpenträger der eingangs genannten Gattung vorgeschlagen, den Kühler in vorzugsweise zwei getrennte, in Umfangsrichtung einen Abstand zueinander aufweisende Kühlkörper aufzuteilen, denen eine entsprechende Anzahl getrennter Kühlluftströme zugeführt werden. Die Ansaugöffnungen für die Kühlluft am Umfang sind versetzt zu den Kühlkörpern in dem durch den Abstand definierten Bereich und an der dem Motor abgewandten Seite des Pumpenträgers angeordnet.

Der größere Abstand vom Antriebsmotor setzt die Intensität der Vermischung mit der erwärmten Motorkühlluft zwar herab, eine Vermischung kann jedoch nicht vollständig vermieden werden.

Ein weiterer Nachteil ist mit der Durchströmung der Kühlerlamellen mittels Kühlluft von innen nach außen verbunden. Die in der Luft enthaltenen Staubpartikel verschmutzen allmählich die Kühlerlamellen. Betroffen sind vor allem die von dem Luftstrom zuerst erfaßten Kühllamellen. Bei einer Führung der Kühlluft von innen nach außen sind das die innenliegenden Bereiche des Ölkühlers, die eine Beobachtung und Feststellung des Grades der Verschmutzung erschweren. Die von Zeit zu Zeit notwendige Reinigung ist durch das Absaugen von innen nach außen schwierig, da innenliegende Staubpartikel durch den gesamten Kühler gesaugt werden müssen.

Schließlich verursacht der für eine effiziente Kühlung notwendige Radiallüfter in Verbindung mit den Leitelementen ganz erhebliche Betriebsgeräusche, die durch die Ansaug- und Austrittsöffnungen der Luft in die freie Atmosphäre gelangen.

Eine Kühleinrichtung für einen Verdichter von Gasen, insbesondere Luftverdichter, zeigt die GB-A 2 088 960. Die Kühleinrichtung besteht aus einem Kühler für verdichtete Gase und zwei Kühlern für die Kühlung von Schmieröl. Entsprechend gering sind die Anforderungen an die Kühlleistung, da Luft eine geringe spezifische Wärme aufweist und Schmieröl nur in geringen Mengen anfällt. Eine übliche beidseitige Ansaugung der Luft durch ein Zentrifugalgebläse mit beidseitigem axialen Lufteintritt bietet daher auch bei einer kompakten Bauform keine Schwierigkeiten. Anders verhält es sich dagegen bei einer hohen Leistungsanforderung mit einem weitaus höheren Kühlluftdurchsatz. Insbesondere bei der Anordnung eines Kühlers nur in einer der Seitenwände mit der Umlenkung der Kühlluft aus radialer Richtung in die axiale Gebläseeintrittsrichtung kommt es zu einer ungleichmäßigen Strömungsverteilung mit der Folge nicht ausreichender Kühlung.

Der Erfindung liegt die Aufgabe zugrunde, diese Nachteile zu beseitigen und einen kompakt gestalteten Pumpenträger mit integriertem Ölkühler hoher Kühlleistung zu schaffen, bei dem auch die Umgebungsluft möglichst ohne Einfluß durch bereits erwärmte Kühlluftanteile des Antriebsmotors und des Pumpenträgers in den Ölkühler gelangen kann. Außerdem soll sich der Pumpenträger durch eine verbesserte Reinigungsmöglichkeit und eine Geräuschreduzierung auszeichnen. Die Druckverluste der Kühlluft sind durch eine konstruktive Gestaltung des Innenraumes des Pumpenträgers im Verhältnis zu vergleichbaren Aggregaten für Hydraulikeinrichtungen zu verringern. Diese Aufgabe wird durch die Merkmale im Anspruch 1 gelöst.

Vorteilhafte Ausgestaltungen sind in den weiteren Ansprüchen angegeben.

So ist es von besonderem Vorteil, in Strömungsrichtung der Luft hinter dem Ölkühler streifenförmige Umlenkelemente anzuordnen, die sich z. T. überlappen. Dadurch ergibt sich eine erhebliche Dämpfung des durch den Kühler nach außen tretenden Ansauggeräuschs.

Die Erfindung ermöglicht den Einsatz eines einzelnen Hochleistungs-Wärmetauschers, der leistungsfähiger ist als die bisherige bekannte Verwendung von Ringkühlern. Im letztgenannten Fall entsteht ein geringerer Druckverlust durch die größeren Strömungsquerschnitte des Unterdruckraumes, denn es wird ein homogener Unterdruck geschaffen, wodurch sich ein gleichmäßiger Luftdurchsatz ohne punktuelle Strömungsspitzen ergibt. Der Kühler kann über seine volle Fläche optimal ausgenutzt werden. Möglich ist eine optimale Abstimmung von Gehäuse und Lüfterrad sowie eine vollständige Ausformung der Lüfterspirale im Gehäuse. Dadurch ergibt sich eine optimale Nutzung des Lüfterrades, versehen mit einem entsprechend hohen Luftdurchsatz. Durch fehlende weitere Wärmetauscher werden erhebliche Kosten eingespart. Die Montage beim Kunden wird vereinfacht. Das Risiko einer Leckage wird reduziert. Es ist ohne Schwierigkeiten ein Austausch eines Hochleistungskühlers gegen einen Hochdruckkühler möglich.

Von besonderem Vorteil ist das Ansaugen der kalten Umgebungsluft durch den Wärmetauscher, wobei durch den Unterdruckraum im Pumpenträger eine gleichmäßige Durchströmung des Wärmetauschers erreicht wird. Die Temperatur der angesaugten Umgebungsluft kann nicht durch betriebswarme Vorrichtungsteile ungünstig beeinflußt werden. Die Verschmutzung eines ansaugenden Wärmetauschers ist von außen sowohl gut erkennbar als auch ohne Betriebsunterbrechung beseitigbar, denn eine Demontage zur problemlosen Reinigung des Wärmetauschers durch Absaugen der sich vor allem auf den äußeren Kühllamellen absetzenden Schmutzpartikel von außen ist nicht notwendig.

Weitere wichtige Vorteile gegenüber Ausführungen nach dem Stand der Technik sind das Fehlen eines störenden Luftstroms im Arbeitsbereich des Personals neben der Motorpumpeeinheit. Der Ansaugtrakt ist etwas seitlich zur Pumpen-Motorachse versetzt und befindet sich außerhalb des Warmluftstromes des Antriebsmotors.

Die den Motor verlassende, erwärmte Kühlluft wird beim Auftreffen auf die den Pumpenträger verlassende Kühlluft radial abgelenkt. Diese Wirkung kann verstärkt werden, wenn der austretenden Kühlluft eine in Richtung des Motors weisende axiale Strömungskomponente beigegeben wird. Sie sorgt dafür, daß es zu keiner Grenzschichtvermischung im Bereich der Ölkühlereinlässe kommt.

In der Zeichnung ist ein Ausführungsbeispiel der Erfindung dargestellt und nachstehend erläutert.

Es zeigen:

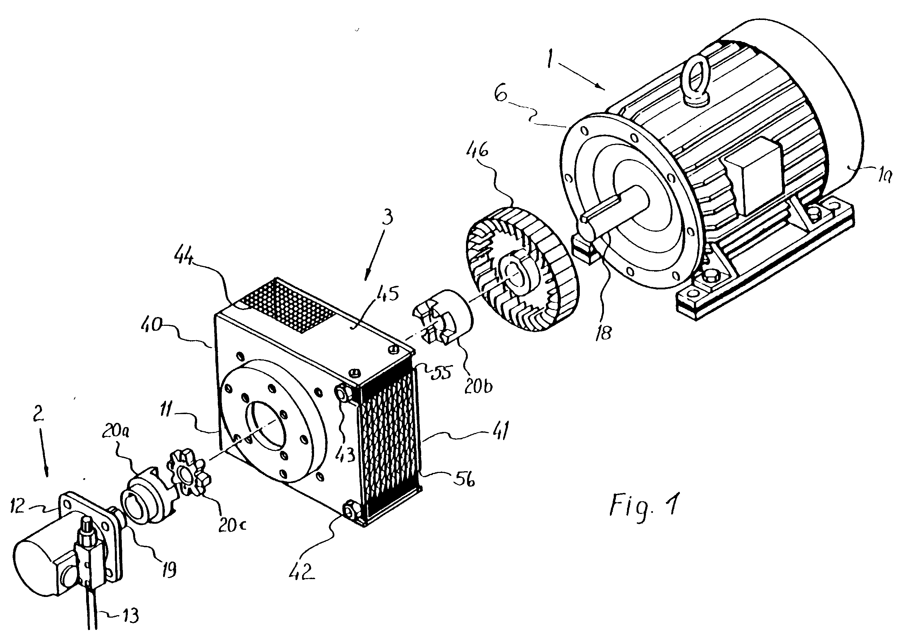

- Figur 1: das Montageschaubild einer Ausführung eines Pumpenträgers mit einem Wärmetauscher und einem vertikalen Luftaustritt,

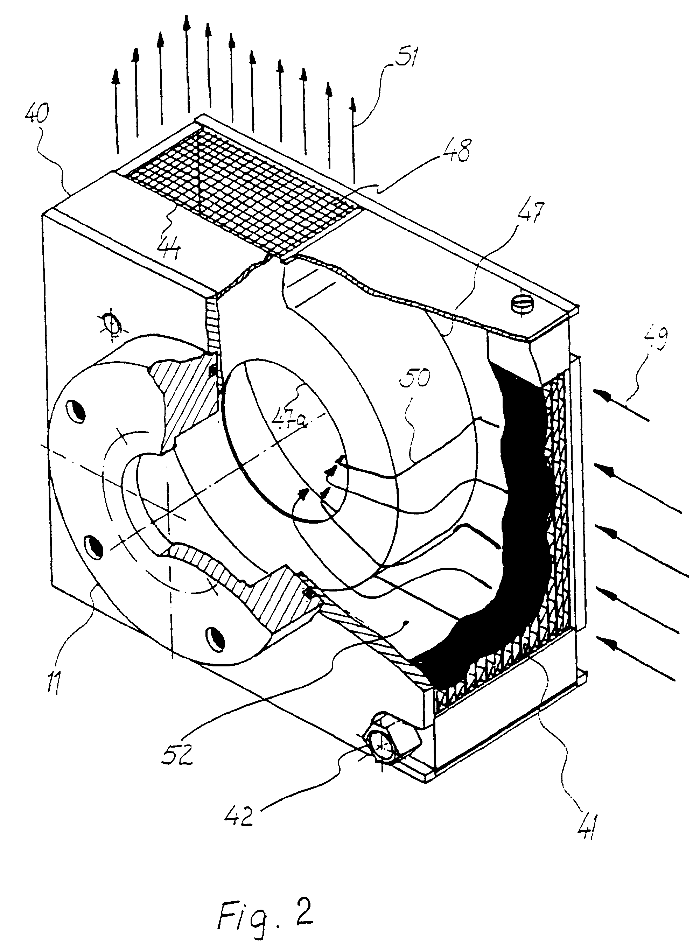

- Figur 2: die schaubildliche Darstellung des Pumpenträgers gemäß Figur 1, z. T. geschnitten,

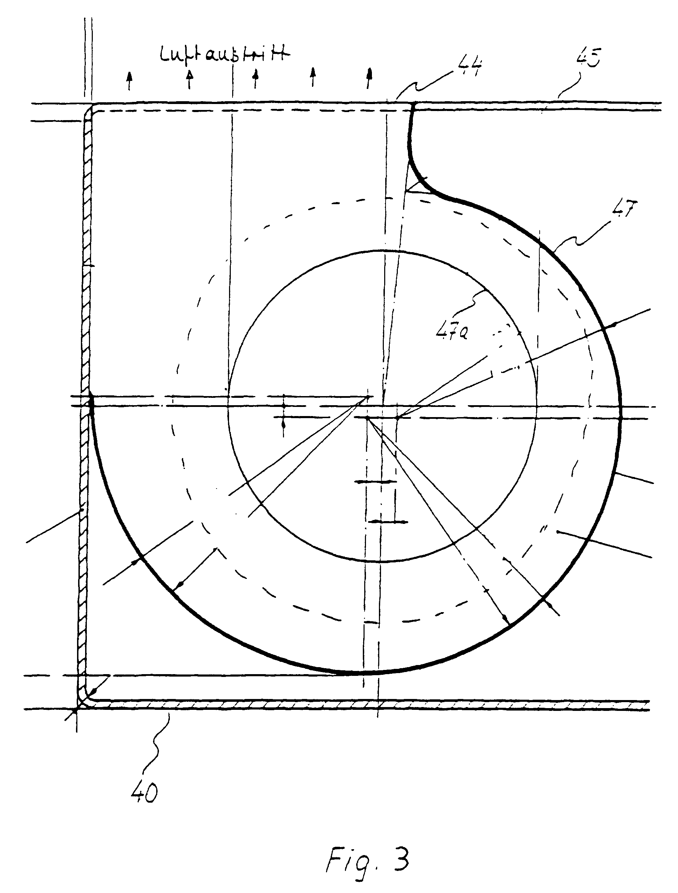

- Figur 3: einen Vertikalschnitt durch den Pumpenträger im Bereich des Leitblechs des Radiallüfters,

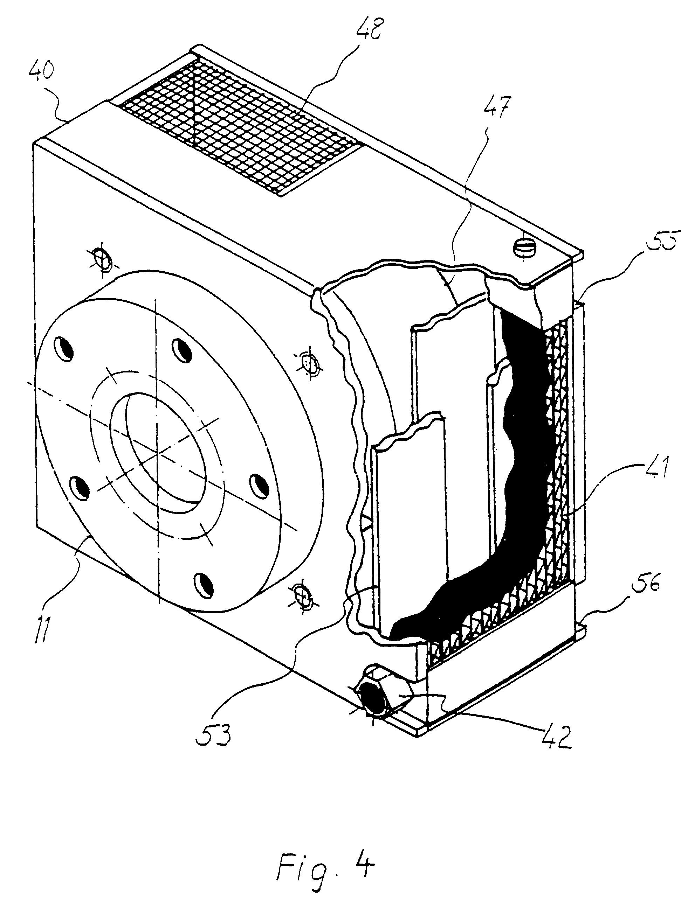

- Figur 4: einen Pumpenträger nach den Figuren 1 und 2 in schaubildlicher Darstellung und z. T. geschnitten mit Schalldämpfungselementen in der Unterdruckkammer.

Die für die Erläuterung der Zeichnung hauptsächlichsten Einzelteile sind in der nachstehenden Bezugszeichenliste mit zugehörigen Bezugsziffern aufgeführt, wobei in allen Figuren für gleiche Teile auch gleiche Ziffern verwendet werden:
- 1: Antriebsmotor
- 1a: Motorgehäuse
- 2: Hydraulikölpumpe
- 3: Pumpenträger
- 6: Motortragflansch
- 11: pumpenseitige Tragplatte
- 12: Pumpentragflansch
- 13: Pumpensaugleitung
- 18: Motorwelle
- 19: Pumpenwelle
- 20a: Kupplungsnabe
- 20c: Kupplungsring
- 40: Grundkörper des Ölkühlers
- 41: Wärmetauscher
- 42: Ölstromeinlaß
- 43: Ölstromauslaß
- 44: Austrittsöffnung
- 45: Deckfläche des Grundkörpers
- 46: Lüfterrad
- 47: Luftleitblech
- 47a: Saugöffnung
- 48: Lüftungsgitter
- 52: Unterdruckkammer
- 53: Umlenkelemente
- 55, 56: Gehäuseaussparungen.

Der Pumpenträger 3 besteht aus einem gehäuseförmigen Grundkörper 40, dessen der Ölpumpe 2 zugekehrte Seite mit einem Pumpenadapterflansch oder Tragplatte 11 versehen ist. An der dem Betrachter zugewandten Schmalseite ist lediglich ein Wärmetauscher 41 angeordnet, dessen Lamellen von zu kühlendem Öl durchströmt werden. Das Öl tritt über den Einlaß 42 ein und verläßt den Ölkühler am Auslaß 43.

Mit 44 ist ein Ausschnitt in der Deckfläche 45 des Grundkörpers bezeichnet, durch welchen die durch den Ölkühler 41 erwärmte Kühlluft den Pumpenträger vertikalgerichtet verläßt.

Das Lüfterrad 46 hat die Ausbildung eines herkömmlichen Walzenlüfters und sitzt auf der Antriebswelle 18 des Antriebsmotors 1. Es läuft innerhalb eines spiralförmig ausgebildeten Luftleitblechs 47, dessen Ansaugöffnung die Antriebswelle bzw. die Kupplung zwischen Antriebswelle 18 und Pumpenwelle 19 umgibt. Folglich wird der Innenraum des Gehäuses 40 zur Unterdruckkammer. Das druckseitige Ende des Luftleitblechs endet unmittelbar am Gehäuseausschnitt 44 in der Deckplatte 45. Der die Luftaustrittsöffnung bildende Ausschnitt 44 ist mit einem Lüftungsgitter 48 abgedeckt.

Die waagerechten Pfeile 49 deuten das Strömungsbild der durch die Lamellen 41 des Ölkühlers hindurchtretenden Kühlluft an. Der weitere Strömungsverlauf der nunmehr erwärmten Kühlluft innerhalb des Pumpenträgers wird durch die Strömungspfeile 50 kenntlich gemacht. Sie treten axial in die Saugöffnung 47a ein und verlassen den Lüfter vertikalgerichtet durch die Austrittsöffnung 44. Die vertikalgerichtete Strömung der erwärmten Kühlluft ist mit 51 gezeigt. Die von der Luft durchströmte Unterdruckkammer ist mit 52 bezeichnet. Der Einbau von streifenförmigen Luftlenkelementen 53 zwischen dem Luftleitblech 47 und dem Wärmetauscher des Ölkühlers trägt zu einer erheblichen Minderung des Ansauggeräusches bei. Die streifenförmigen Umlenkelemente sind mit Abstand zueinander und teilweise überlappend angeordnet und halten jeweils zum Luftleitblech 47 einerseits und zum Ölkühler andererseits einen ausreichenden Abstand ein. Die gezeigte Anordnung der streifenförmigen Umlenkelemente in vertikaler Ausrichtung bilden somit eine "Schallfalle" für die vor allem durch den Lüfter in Verbindung mit dem Leitblech erzeugten Ansauggeräusche.

Vorsorglich sind im Einbaubereich des Ölkühlers Aussparungen 55 und 56 im Grundkörpergehäuse vorgesehen, um den Ölkühler und dessen Ölanschlüsse bei Bedarf rasch ein- und ausbauen sowie drehen zu können.

Anhand von Prüfstandversuchen hat sich ergeben, daß bei gesteigerter Kühlleistung durch die Verwendung der streifenförmigen Dämpfungselemente eine nicht unerhebliche Schallreduzierung am Meßpunkt vor dem Wärmetauscher (etwa 3 dB) erzielt wurde. Dabei können die Dämpfungsstreifen in unterschiedlicher Weise befestigt werden, beispielsweise durch festes Verschweißen von Metallstreifen durch eine Verbindung mit den Befestigungslaschen des Wärmetauschers oder bei Kunststoffstreifen durch beliebiges Einstecken, wie mit einem "Schnappverschluß".

## Patentansprüche

1. Pumpenträger (3) mit einer Hydraulikölpumpe (2) einer Hydraulikeinrichtung einem elektrischen Antriebsmotor (1) und einem Wellenstrang (18, 19), zum Verbinden der Hydraulikölpumpe (2) der Hydraulikeinrichtung mit dem elektrischen Antriebsmotor (1) über den Wellenstrang (18, 19) dient, mit einem einzigen in den Grundkörper (40) des Pumpenträgers integrierten Ölkühler (41) für das Hydrauliköl und mit einem innerhalb des Pumpenträgers und auf dem Wellenstrang angeordneten Walzenlüfter (46), wobei der Ölkühler in einer ersten Grundkörperwand derart angeordnet ist, daß vom Walzenlüfter geförderte Luft senkrecht zu dem Wellenstrang von außen durch den Ölkühler tritt, bei dem
der Walzenlüfter (46), der innerhalb eines spiralförmigen Luftleitblechs (47) mit einseitiger Saugöffnung (47a) angeordnet ist, im Grundkörper (40) in Richtung der der Saugöffnung (47a) gegenüberliegenden Seite auf eine Seitenwand versetzt angeordnet ist, daß im Grundkörper zwischen dem Ölkühler (41) und dem Walzenlüfter eine Unterdruckkammer (52) vorgesehen ist, wobei das Luftleitblech (47) asymmetrisch im Grundkörper (40), d.h., mit Abstand zum Ölkühler (41) und in die dem Ölkühler gegenüberliegende Wand des Grundkörpers (40) übergehend angeordnet ist, und der Unterdruckkammer die den Wellenstrang umgebende Saugöffnung (47a) zugewandt und die Austrittsöffnung (44) in einer der ersten Grundkörperwand abgewandten zweiten Grundkörperwand (45) angeordnet ist und daß der Ölkühler (41) über die gesamte Fläche der ersten Grundkörperwand ausgebildet ist.

2. Pumpenträger nach Anspruch 1, **dadurch gekennzeichnet, daß** der Walzenlüfter für eine bevorzugte Drehrichtung mit gekrümmten Laufschaufeln ausgestattet ist.

3. Pumpenträger nach Anspruch 2, **dadurch gekennzeichnet, daß** im Unterdruckraum (52) in Strömungsrichtung der Luft hinter dem Ölkühler (41) einander überlappende, streifenförmige Umlenkelemente (53) angeordnet sind.

## Claims

1. Pump-carrier (3) with a hydraulic-oil pump (2), a hydraulic arrangement, an electric drive motor (1) and a series of shafts (18, 19), the pump-carrier serving to connect the hydraulic-oil pump (2) of the hydraulic arrangement to the electric drive motor (1) via the series of shafts (18, 19); the said pump-carrier having a single oil-cooler (41) for the hydraulic oil, which oil-cooler is integrated into the basic body (40) of the pump-carrier, and having a roller-type fan (46) which is arranged inside the pump-carrier and on the series of shafts, the oil-cooler being arranged in a first basic-body wall in such a way that air conveyed by the roller-type fan passes through the oil-cooler from outside perpendicularly to the series of shafts; in which pump-carrier the roller-type fan (46), which is arranged inside a spiral-shaped sheet-metal air-guide (47) with a one-sided intake opening (47a), is arranged in the basic body (40) so as to be offset onto one side wall in the direction of the side opposite the said intake opening (47a); in which pump-carrier a negative-pressure chamber (52) is provided in the basic body, between the oil-cooler (41) and the roller-type fan, the sheet-metal air-guide (47) being arranged asymmetrically in the basic body (40), that is to say at a spacing from the oil-cooler (41) and in a manner merging into the opposite wall of the basic body (40) from the said oil-cooler, the intake opening (47a) surrounding the series of shafts facing towards the negative-pressure chamber, and the exit opening (44) being arranged in a second basic-body wall (45) that faces away from the first basic-body wall; and in which pump-carrier the oil-cooler (41) is constructed over the entire surface of the first basic-body wall.

2. Pump-carrier according to claim 1, **characterised in that** the roller-type fan is equipped with curved moving blades for a preferred direction of rotation.

3. Pump-carrier according to claim 2, **characterised in that** mutually overlapping, strip-shaped deflecting elements (53) are arranged, downstream of the oil-cooler (41) referred to the direction of flow of the air, in the negative-pressure compartment (52).

## Revendications

1. Support de pompe (3) avec une pompe à huile hydraulique (2), un dispositif hydraulique, un moteur d'entraînement électrique (1) et une ligne d'arbres (18, 19), le support de pompe servant à connecter la pompe à huile hydraulique (2) du dispositif hydraulique au moteur d'entraînement électrique (1) par le biais de la ligne d'arbres (18, 19), comprenant un refroidisseur d'huile (41) unique pour l'huile hydraulique, intégré dans le corps de base (40) du support de pompe, et comprenant un ventilateur centrifuge (46) disposé à l'intérieur du support de pompe et sur la ligne d'arbres, le refroidisseur d'huile étant disposé dans une première paroi du corps de base de telle sorte que l'air alimenté par le ventilateur centrifuge passe perpendiculairement à la ligne d'arbres depuis l'extérieur à travers le refroidisseur d'huile, le ventilateur centrifuge (46), qui est disposé à l'intérieur d'une tôle chicane (47) en forme de spirale ayant une ouverture d'aspiration (47a) d'un côté, étant disposé dans le corps de base (40) dans la direction du côté faisant face à l'ouverture d'aspiration (47a) de manière décalée en direction d'une paroi latérale, en ce qu'une chambre de dépression (52) est prévue dans le corps de base entre le refroidisseur d'huile (41) et le ventilateur centrifuge, la tôle chicane (47) étant disposée de façon asymétrique dans le corps de base (40), c'est-à-dire avec un écart plus grand par rapport au refroidisseur d'huile (41) que par rapport à la paroi du corps de base (40) faisant face au refroidisseur d'huile, et la chambre de dépression vers laquelle est tournée l'ouverture d'aspiration (47a) entourant la ligne d'arbres et l'ouverture de sortie (44) est disposée dans une deuxième paroi (45) du corps de base opposée à la première paroi du corps de base, et en ce que le refroidisseur d'huile (41) est formé sur toute la surface de la première paroi du corps de base.

2. Support de pompe selon la revendication 1, **caractérisé en ce que** le ventilateur centrifuge est équipé d'aubes courbes pour avoir un sens de rotation préféré.

3. Support de pompe selon la revendication 2, **caractérisé en ce que** la chambre de dépression (52) sont disposés, dans le sens de l'écoulement de l'air derrière le refroidisseur d'huile (41), des éléments de déviation (53) se chevauchant, en forme de bandes.
